# EUROPEAN PATENT APPLICATION

(11) **EP 4 773 552 A1**
(43) Date of publication of application: **08.07.2026**
(21) Application number: 23950876.5
(22) Date of filing: 30.08.2023
(51) Int. Cl.: H04L 12/40, H04L 7/00, H04L 1/16

(54) **ELECTRIC EQUIPMENT**

(71) Applicant: LG Electronics Inc., Yeongdeungpo-gu Seoul 07336 (KR)
(72) Inventor: JUN, Jungsig, Seoul 06772 (KR); YUN, Jinsik, Seoul 06772 (KR); LEE, Kyungjik, Seoul 06772 (KR); KIM, Dongki, Seoul 06772 (KR); YANG, Jiyoun, Seoul 06772 (KR); CHO, Dongjun, Seoul 06772 (KR)
(74) Representative: Vossius & Partner Patentanwälte Rechtsanwälte mbB
(86) International application number: PCT/KR2023/012924
(87) International publication number: WO 2025/048001

(57) **Abstract**

The present disclosure relates to an electrical device. The electrical device of the present disclosure includes a first circuit board including a first signal processing device; and a second circuit board including a second signal processing device, wherein the first signal processing device includes a processor, a master communication interface for data communication with the second signal processing device, and a peripheral device communication interface, and wherein the second signal processing device includes a slave communication interface for data communication with the first signal processing device and a second peripheral device communication interface, wherein the master communication interface is configured to transmit a first interrupt to the processor, and the second peripheral device communication interface is configured to transmit a second interrupt to the slave communication interface.

## Description

### BACKGROUND

### 1. Technical Field

This disclosure relates to an electrical device, and more particularly, to an electrical device capable of stably performing extensible data communication.

### 2. Description of the Related Art

An electrical device can be an electric device used in a home, such as a washing machine, a refrigerator, and an air conditioner.

As the functionality of electrical device becomes more sophisticated, various functions are being added.

To achieve this, a plurality of signal processing devices are used within the electrical device, and data communication is performed between each signal processing device.

For example, when using a Universal Asynchrounous serial Receiver and Transmitter (UART) communication, which is an example of serial communication, for data communication between signal processing devices, there is a disadvantage in that data communication becomes less smooth as the number of signal processing devices increases because data is transmitted in a cascade manner.

### SUMMARY

The disclosure has been made in view of the above problems, and can provide an electrical device capable of reliably performing extensible data communication.

Meanwhile, the disclosure can further provide an electrical device capable of stably performing extensible data communication between signal processing devices or circuit boards.

Meanwhile, the disclosure can further provide an electrical device capable of applying common data communication to various types of electrical devices.

In accordance with an aspect of the present disclosure, an electrical device includes: a first circuit board including a first signal processing device; and a second circuit board including a second signal processing device, wherein the first signal processing device includes a processor, a master communication interface for data communication with the second signal processing device, and a peripheral device communication interface, and wherein the second signal processing device includes a slave communication interface for data communication with the first signal processing device and a second peripheral device communication interface, wherein the master communication interface is configured to transmit a first interrupt to the processor, and the second peripheral device communication interface is configured to transmit a second interrupt to the slave communication interface.

Meanwhile, the master communication interface can be configured to transmit a control command, and the slave communication interface is configured to receive the control command.

Meanwhile, the master communication interface can be configured to output serialized data or deserialize received serialized data.

Meanwhile, the first signal processing device further includes a bus for the peripheral device communication interface, and the bus can be configured to exchange data with the processor or the master communication interface.

Meanwhile, the master communication interface can be configured to control communication with the bus, or generate data based on a communication protocol.

Meanwhile, the second signal processing device further includes a second bus for the second peripheral device communication interface, and the second bus can be configured to exchange data with the slave communication interface.

Meanwhile, the slave communication interface can be configured to control communication with the second bus, or generate data based on a communication protocol.

Meanwhile, the first signal processing device further includes a clock signal generator configured to generate a clock signal, and the master communication interface is configured to output a data signal and the clock signal.

Meanwhile, the first signal processing device can be configured to deserialize received serialized data, based on the clock signal from the clock signal generator.

Meanwhile, the master communication interface can be configured to stop data communication for a certain period of time, in response to an occupancy rate of data communication line being greater than or equal to a reference value.

Meanwhile, the slave communication interface can be configured to transmit a control command received from the master communication interface to the second peripheral device communication interface, and, in response to the second peripheral device communication interface not responding for a set period of time, transmit a generated error response signal and the second interrupt from the second peripheral device communication interface to the master communication interface.

Meanwhile, a common address data output from the master communication interface can include key information, register indicator information, slave indicator information, and address information.

Meanwhile, transmission address data output from the master communication interface can include write address information, read address information, and monitoring information.

Meanwhile, the reception data received from the master communication interface can include error information and interrupt information.

Meanwhile, the master communication interface or the slave communication interface can include a differential end interface.

Meanwhile, the master communication interface or the slave communication interface can include a single end interface.

Meanwhile, the electrical device according to an aspect of the present disclosure further includes a third circuit board including a third signal processing device, wherein the third signal processing device includes a second slave communication interface for data communication with the first signal processing device and a third peripheral device communication interface, wherein the third peripheral device communication interface is configured to transmit a third interrupt to the second slave communication interface.

Meanwhile, the master communication interface can be configured to transmit a control command, and the slave communication interface and the second slave communication interface are configured to receive the control command.

Meanwhile, the second slave communication interface can be configured to transmit a control command received from the master communication interface to the third peripheral device communication interface, and in response to the third peripheral device communication interface not responding for a second set period of time, transmit a generated second error response signal and the third interrupt from the third peripheral device communication interface to the master communication interface.

In accordance with another aspect of the present disclosure, an electrical device includes: a first signal processing device; a second signal processing device; and a third signal processing device, wherein the first signal processing device includes a processor and a master communication interface for data communication with the second signal processing device, wherein the second signal processing device includes a slave communication interface for data communication with the first signal processing device, wherein the third signal processing device includes a second slave communication interface for data communication with the first signal processing device, wherein the master communication interface is configured to transmit a control command, and the slave communication interface and the second slave communication interface are configured to receive the control command.

### EFFECTS OF THE DISCLOSURE

An electrical device according to an embodiment of the present disclosure includes: a first circuit board including a first signal processing device; and a second circuit board including a second signal processing device, wherein the first signal processing device includes a processor, a master communication interface for data communication with the second signal processing device, and a peripheral device communication interface, and wherein the second signal processing device includes a slave communication interface for data communication with the first signal processing device and a second peripheral device communication interface, wherein the master communication interface is configured to transmit a first interrupt to the processor, and the second peripheral device communication interface is configured to transmit a second interrupt to the slave communication interface. This enables to stably perform extensible data communication. Specifically, it enables to stably perform extensible data communication between circuit boards. Furthermore, common data communication can be applied to various types of electrical devices.

Meanwhile, the master communication interface can be configured to transmit a control command, and the slave communication interface is configured to receive the control command. This enables to stably perform extensible data communication.

Meanwhile, the master communication interface can be configured to output serialized data or deserialize received serialized data. This enables to stably perform extensible data communication.

Meanwhile, the first signal processing device further includes a bus for the peripheral device communication interface, and the bus can be configured to exchange data with the processor or the master communication interface. This enables to stably perform extensible data communication.

Meanwhile, the master communication interface can be configured to control communication with the bus, or generate data based on a communication protocol. This enables to stably perform extensible data communication.

Meanwhile, the second signal processing device further includes a second bus for the second peripheral device communication interface, and the second bus can be configured to exchange data with the slave communication interface. This enables to stably perform extensible data communication.

Meanwhile, the slave communication interface can be configured to control communication with the second bus, or generate data based on a communication protocol. This enables to stably perform extensible data communication.

Meanwhile, the first signal processing device further includes a clock signal generator configured to generate a clock signal, and the master communication interface is configured to output a data signal and the clock signal. This enables to stably perform extensible data communication.

Meanwhile, the first signal processing device can be configured to deserialize received serialized data, based on the clock signal from the clock signal generator. This enables to stably perform extensible data communication.

Meanwhile, the master communication interface can be configured to stop data communication for a certain period of time, in response to an occupancy rate of data communication line being greater than or equal to a reference value. This enables to stably perform extensible data communication.

Meanwhile, the slave communication interface can be configured to transmit a control command received from the master communication interface to the second peripheral device communication interface, and, in response to the second peripheral device communication interface not responding for a set period of time, transmit a generated error response signal and the second interrupt from the second peripheral device communication interface to the master communication interface. This enables to stably perform extensible data communication.

Meanwhile, a common address data output from the master communication interface can include key information, register indicator information, slave indicator information, and address information. This enables to stably perform extensible data communication.

Meanwhile, transmission address data output from the master communication interface can include write address information, read address information, and monitoring information. This enables to stably perform extensible data communication.

Meanwhile, the reception data received from the master communication interface can include error information and interrupt information. This enables to stably perform extensible data communication.

Meanwhile, the master communication interface or the slave communication interface can include a differential end interface. This enables to stably perform extensible data communication.

Meanwhile, the master communication interface or the slave communication interface can include a single end interface. This enables to stably perform extensible data communication.

Meanwhile, the electrical device according to an aspect of the present disclosure further includes a third circuit board including a third signal processing device, wherein the third signal processing device includes a second slave communication interface for data communication with the first signal processing device and a third peripheral device communication interface, wherein the third peripheral device communication interface is configured to transmit a third interrupt to the second slave communication interface. This enables to stably perform extensible data communication.

Meanwhile, the master communication interface can be configured to transmit a control command, and the slave communication interface and the second slave communication interface are configured to receive the control command. This enables to stably perform extensible data communication.

Meanwhile, the second slave communication interface can be configured to transmit a control command received from the master communication interface to the third peripheral device communication interface, and in response to the third peripheral device communication interface not responding for a second set period of time, transmit a generated second error response signal and the third interrupt from the third peripheral device communication interface to the master communication interface. This enables to stably perform extensible data communication.

The electrical device according to another embodiment of the present disclosure includes: a first signal processing device; a second signal processing device; and a third signal processing device, wherein the first signal processing device includes a processor and a master communication interface for data communication with the second signal processing device, wherein the second signal processing device includes a slave communication interface for data communication with the first signal processing device, wherein the third signal processing device includes a second slave communication interface for data communication with the first signal processing device, wherein the master communication interface is configured to transmit a control command, and the slave communication interface and the second slave communication interface are configured to receive the control command. This enables to stably perform extensible data communication. Specifically, it enables to stably perform extensible data communication between circuit boards. Furthermore, common data communication can be applied to various types of electrical devices.

### BRIEF DESCRIPTION OF THE DRAWINGS

FIG. 1 is an example of a configuration diagram of an electrical device system including an electrical device according to an embodiment of the present disclosure;
FIGS. 2A to 2E are diagrams illustrating various examples of the electrical device of FIG. 1;
FIG. 3A is an example of an internal block diagram of an electrical device related to the present disclosure;
FIG. 3B is a diagram for explaining FIG. 3A;
FIG. 4 is an example of an internal block diagram of an electrical device according to an embodiment of the present disclosure; and
FIGS. 5 to 11 are diagrams for explaining FIG. 4.

### DETAILED DESCRIPTION OF THE PREFERRED EMBODIMENTS

Hereinafter, the present disclosure will be described in more detail with reference to the drawings.

The suffixes such as "module" and "unit" can be used to refer to elements or components. Use of such suffixes herein is merely intended to facilitate description of the specification, and the suffixes do not have any special meaning or function. Accordingly, the terms "module" and "unit" can be used interchangeably.

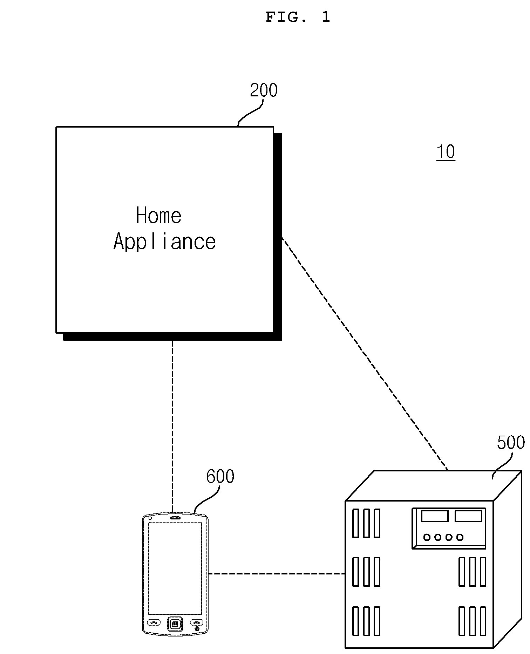

FIG. 1 is an example of a configuration diagram of an electrical device system including an electrical device according to an embodiment of the present disclosure.

Referring to FIG. 1, an electrical device system 10 according to an embodiment of the present disclosure can include an electrical device 200, the mobile terminal 600, and a server 500.

In addition, the electrical device system 10 can further include an access point (AP) device (not shown) for connecting the electrical device 200 to an external network.

The electrical device 200 includes a display, such as an LED and LCD, a sensor, and a plurality of signal processing devices, and can operate based on a sensor signal from the sensor.

For example, the electrical device 200 can further include a motor, magnetron, or heater for load control, etc.

Meanwhile, the electrical device 200 can include an inverter that converts direct current power into alternating current power for efficient control of the motor, magnetron, or heater.

Meanwhile, the mobile terminal 600 can be configured to perform wireless communication with the electrical device 200 to remotely control the wirelessly connected electrical device 200, or to receive monitoring data from the electrical device 200.

Meanwhile, the server 500 can provide data to the electrical device 200 connected through a network or the like.

For example, the server 500 can provide update information to the electrical device 200 in response to a request of the mobile terminal 600.

As another example, the server 500 can provide update information to the electrical device 200 when necessary, even when there is no request from the mobile terminal 600 or the electrical device 200.

Meanwhile, the update information can include firmware update information, software update information, and the like.

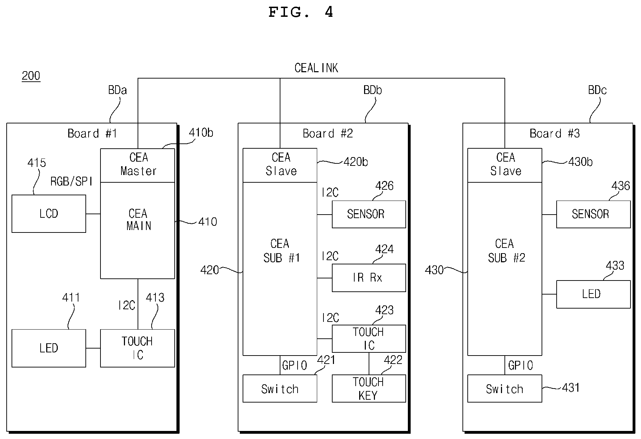

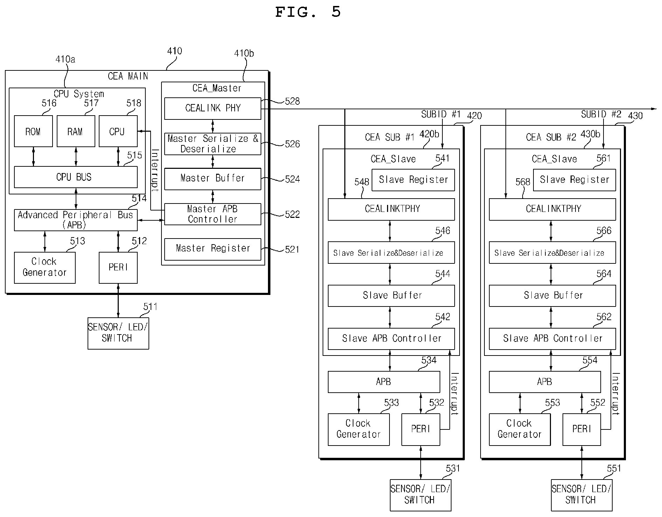

The electric device 200 according to an embodiment of the present disclosure includes a first signal processing device (410 of FIG. 4) and a second signal processing device (420 of FIG. 4). The first signal processing device 410 includes a processor (518 of FIG. 5), a master communication interface (410b of FIG. 5) for data communication with the second signal processing device 420, and a peripheral device communication interface 512. The second signal processing device 420 includes a slave communication interface (420b of FIG. 5) for data communication with the first signal processing device 410 and a second peripheral device communication interface (532 of FIG. 5). The master communication interface 410b transmits a first interrupt to the processor 518, and the second peripheral device communication interface 532 transmits a second interrupt to the slave communication interface 420b. Accordingly, extensible data communication can be performed stably. In particular, extensible data communication can be performed stably between circuit boards. Furthermore, common data communication can be applied to various types of electrical devices.

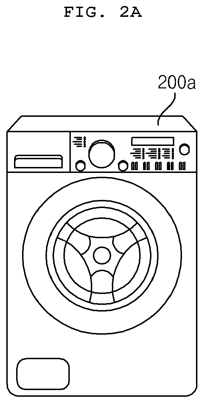

Meanwhile, various examples of the electrical device 200 applied in this disclosure can be suggested. Examples are illustrated in FIGS. 2A to 2E.

FIGS. 2A to 2E are diagrams illustrating various examples of the electrical device of FIG. 1.

FIG. 2A illustrates a washing machine 200a as an example of an electrical device.

When the electrical device 200 is the washing machine 200a, the washing machine 200a can include a washing tub motor (not shown) and an inverter (not shown) for rotating the washing tub motor so as to rotate a washing tub.

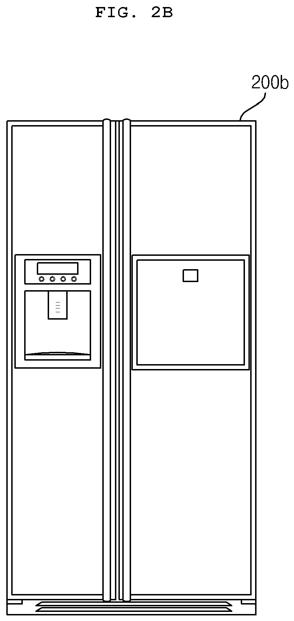

FIG. 2B illustrates a refrigerator 200b as an example of an electrical device.

When the electrical device 200 is the refrigerator 200b, the refrigerator 200b can include a compressor (not shown), a compressor motor (not shown) for operation of the compressor, and an inverter (not shown) for controlling the compressor motor so as to supply cold air into the refrigerator.

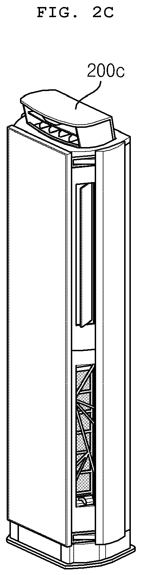

FIG. 2C illustrates an air conditioner 200c as an example of an electrical device.

When the electrical device 200 is the air conditioner 200c, the air conditioner 200c can include a compressor (not shown), a compressor motor (not shown) for operation of the compressor, and an inverter (not shown) for controlling the compressor motor so as to supply cold air from the air conditioner.

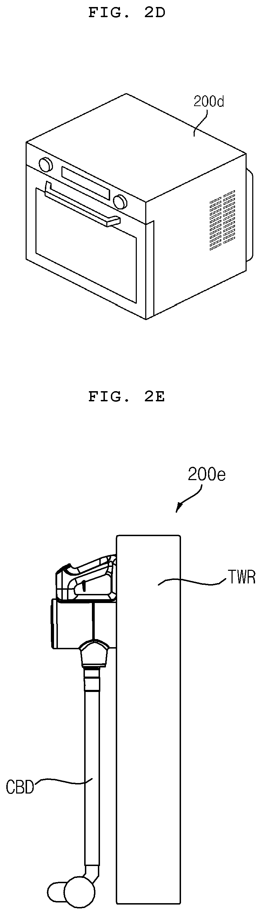

FIG. 2D illustrates a cooking appliance 200d as an example of an electrical device.

When the electrical device 200 is the cooking appliance 200d, the cooking appliance 200d can include a magnetron (not shown) or a light wave heater (not shown) and an inverter (not shown) for controlling the magnetron or light wave heater so as to heat foods in the cooking appliance.

FIG. 2E illustrates a vacuum cleaner 200e as an example of an electrical device.

If the electrical device 200 is a vacuum cleaner 200e, the vacuum cleaner 200e can include a fan motor (not shown) and an inverter (not shown) for controlling the fan motor to suck up foreign substances inside the vacuum cleaner 200e.

Meanwhile, the electrical device 200 according to the embodiment of the present disclosure can include various examples, such as a washing machine 200a, a refrigerator 200b, an air conditioner 200c, a cooking appliance 200d, and a vacuum cleaner 200e, as well as a dryer, a clothing care device, a robot vacuum cleaner, an air purifier, a TV, a monitor, a laptop, a mobile terminal, a vehicle display device, an electric vehicle, a robot, a drone, and the like.

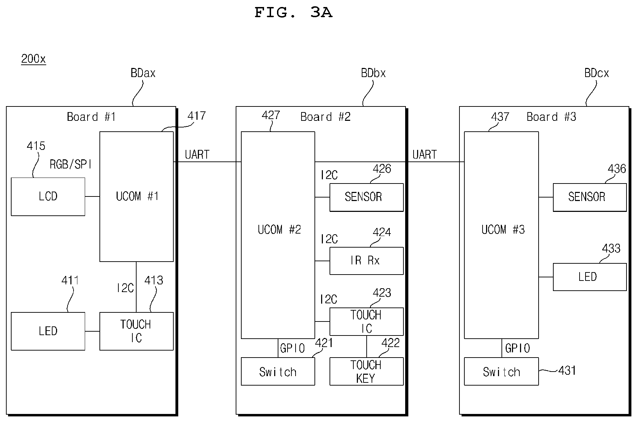

FIG. 3A is an example of an internal block diagram of an electrical device related to the present disclosure.

Referring to FIG. 3A, an electrical device 200x related to the present disclosure can include a first circuit board BDax having a first microcomputer 417, a second circuit board BDbx having a second microcomputer 427, and a third circuit board BDcx having a third microcomputer 437.

The first circuit board BDax can further include a display 415, a light-emitting diode 410, and a touch input device 413.

The second circuit board BDbx can further include a switch 421, a touch key 422, a touch input device 423, an IR receiver 424, and a sensor device 426.

The third circuit board BDcx can include a switch 431, a light-emitting diode 433, and a sensor device 436.

Meanwhile, Universal Asynchrounous Serial Receiver and Transmitter (UART) communication can be performed between the first microcomputer 417 and the second microcomputer 427, and between the first microcomputer 417 and the second microcomputer 427.

Meanwhile, as shown in the drawing, if UART communication is performed between a plurality of microcomputers 417, 427, 437, data must be transmitted via the second microcomputer 427 when data is transmitted from the first microcomputer 417 to the third microcomputer 437. That is, as shown in the drawing, data must be transmitted in a cascade manner.

Thus, there exists a problem in that the input/output burden for data bypass increases, and as the number of microcomputers increases, the data transmission speed significantly decreases.

Furthermore, there is a disadvantage in that separate programming for microcomputer operation is required, as each circuit board requires its own microcomputer.

Accordingly, the present disclosure proposes a method for stably performing data communication. In particular, a method for stably performing extensible data communication between signal processing devices or circuit boards is proposed. This will be described with reference to FIG. 5 and below.

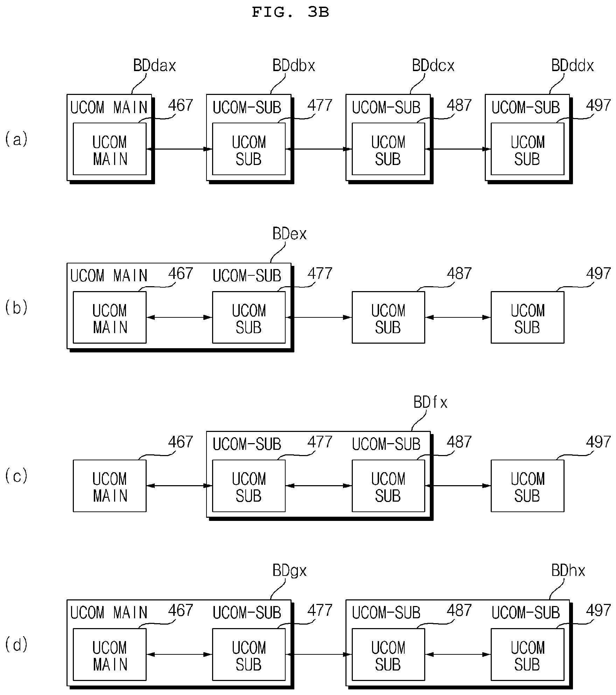

FIG. 3B is a drawing for explaining FIG. 3a. In particular, FIG. 3B is a drawing illustrating various examples of the arrangement of a plurality of microcomputers.

Referring to FIG. 3B, as shown in FIG. 3B(a), a plurality of microcomputers 467, 477, 487, 497 can be mounted on respective circuit boards BDax, BDbx, BDcx, BDdx.

Alternatively, as shown in FIG. 3B(b), some 467, 487 of the plurality of microcomputers 467, 477, 487, 497 can be mounted on the circuit board BDex, while others 487, 497 cannot be mounted on the circuit board.

Alternatively, as shown in FIG. 3B(c), some 477, 487 of the plurality of microcomputers 467, 477, 487, 497 can be mounted on a circuit board BDfx, while others 467, 497 cannot be mounted on the circuit board.

Alternatively, as shown in FIG. 3B(d), some 467, 487 of the plurality of microcomputers 467, 477, 487, 497 can be mounted on a first circuit board BDgx, while others 487, 497 can be mounted on a second circuit board BDjx.

Meanwhile, data communication between the plurality of microcomputers 467, 477, 487, 497, in FIG. 3B(a) to FIG. 3B(d), can be performed in a cascade manner. Accordingly, there are problems in that an input/output burden for data bypass is increased, and data transmission speed is significantly lowered as the number of microcomputers increases.

FIG. 4 is an example of an internal block diagram of an electric device according to an embodiment of the present disclosure.

Referring to FIG. 4, the electric device 200 according to an embodiment of the present disclosure includes a first circuit board BDa having a first signal processing device 410 and a second circuit board BDb having a second signal processing device 420.

Meanwhile, the first signal processing device 410 includes a processor (518 of FIG. 5), a master communication interface 410b for data communication with the second signal processing device 420, and a peripheral device communication interface (512 of FIG. 5).

Meanwhile, the second signal processing device 420 includes a slave communication interface 420b for data communication with the first signal processing device 410 and a second peripheral device communication interface (532 in FIG. 5).

Meanwhile, the master communication interface 410b transmits a first interrupt to the processor 518, and the second peripheral device communication interface 532 transmits a second interrupt to the slave communication interface 420b.

Therefore, extensible data communication can be performed stably. In particular, extensible data communication can be performed stably between circuit boards. Furthermore, common data communication can be applied to various types of electrical devices.

Meanwhile, the electrical device 200 according to an embodiment of the present disclosure can include a third circuit board BDc including a third signal processing device 430.

The third signal processing device 430 can include a second slave communication interface 430b for data communication with the first signal processing device 410 and a third peripheral device communication interface 452 (in FIG. 5).

Meanwhile, the master communication interface 410b can transmit control commands, and the slave communication interface 420b or the second slave communication interface 430b can receive control commands. Accordingly, extensible data communication can be performed stably.

Meanwhile, the master communication interface 410b can output serialized data to the slave communication interface 420b or the second slave communication interface 430b, or deserialize the serialized data received from the slave communication interface 420b or the second slave communication interface 430b.

Such a communication method between the master communication interface 410b and the slave communication interface 420b or the second slave communication interface 430b can be a serial communication method based on a Chip Extensible Architecture.

Therefore, the communication method between the master communication interface 410b and the slave communication interface 420b or the second slave communication interface 430b can be referred to as a CEALINK communication method.

Meanwhile, the first circuit board BDa can further include a display 415, a light-emitting diode 410, and a touch input device 413.

The second circuit board BDb can further include a switch 421, a touch key 422, a touch input device 423, an IR receiver 424, and a sensor device 426.

The third circuit board BDc can include a switch 431, a light-emitting diode 433, and a sensor device 436.

Meanwhile, a Serial Peripheral Interface (SPI) communication can be performed between the first signal processing device 410 and the display 415 within the first circuit board BDa, and an Inter-Integrated Circuit (I2C) communication can be performed between the first signal processing device 410 and the touch input device 413.

Meanwhile, an I2C communication can be performed between the second signal processing device 420 within the second circuit board BDb, the touch input device 413, the IR receiver 424, or the sensor device 426, and a General Purpose Input Output (GPIO) communication can be performed between the second signal processing device 420 and the switch 421.

Meanwhile, an I2C communication can be performed between the third signal processing device 430 and the sensor device 436 within the third circuit board BDc, and a GPIO communication can be performed between the third signal processing device 430 and the switch 421 or the light-emitting diode 433.

Meanwhile, the aforementioned CEALINK communication can be performed between the first signal processing device 410 and the second signal processing device 420, and between the first signal processing device 410 and the second signal processing device 420.

Meanwhile, as shown in the drawing, when CEALINK communication is performed between a plurality of signal processing devices 410, 420, 430, data transmission from the first signal processing device 410 to the third signal processing device 430 does not have to pass through the second signal processing device 420, thereby enabling rapid data communication.

Furthermore, even if the number of signal processing devices increases, compared to FIG. 3A, it is advantageous in that data transmission is performed quickly and stably. Furthermore, the common design of the signal processing devices provides the advantage of eliminating the need for separate programming for their operation.

FIGS. 5 to 11 are drawings for explaining FIG. 4.

First, FIG. 5 is an example of an internal block diagram of each signal processing device of FIG. 4.

Referring to FIG. 5, the first signal processing device 410 includes a master communication interface 410b for data communication with the second signal processing device 420 and a peripheral device communication interface 512.

Meanwhile, the peripheral device communication interface 512 can exchange signals with a peripheral device 511, such as a sensor device, a light-emitting diode, or a switch.

Meanwhile, the processor 518 can be included within a processor package 410a, along with a ROM 516, a RAM 517, and a processor bus 515.

Meanwhile, the first signal processing device 410 can further include a bus 514 for the peripheral device communication interface 512.

Meanwhile, the bus 514 can exchange data with the processor 518 or the master communication interface 410b.

Meanwhile, the master communication interface 410b can control communication with the bus 514 or generate data based on a communication protocol.

Meanwhile, the first signal processing device 410 can further include a clock signal generator 513 configured to generate a clock signal.

Meanwhile, the master communication interface 410b can output a data signal and a clock signal.

Meanwhile, the first signal processing device 410 can deserialize a received serialized data, based on the clock signal from the clock signal generator 513.

Meanwhile, the master communication interface 410b can control data communication to be suspended for a certain period of time, if the occupancy rate of data communication line is greater than or equal to a reference value.

Meanwhile, the master communication interface 410b can include a CEALINK physical layer processor 528, a data serializer or deserializer 526, a buffer 524, a bus controller 522, and a register 531.

The CEALINK physical layer processor 528 can output data to the outside or can receive data, according to physical layer processing for CEALINK communication.

The bus controller 522 can control communication with the bus 514, or generate signals using a protocol for CEALINK communication.

Meanwhile, the buffer 524 operates for asynchronous communication between the bus controller 522 and the data serializer or deserializer 526.

Meanwhile, the data serializer or deserializer 526 can serialize data to be transmitted, or deserialize received data.

Meanwhile, the second signal processing device 420 includes a slave communication interface 420b for data communication with the first signal processing device 410 and a second peripheral device communication interface 532.

Meanwhile, the second peripheral device communication interface 532 can exchange signals with the peripheral device 531, such as sensor device, light-emitting diode, or switch.

Meanwhile, unlike the first signal processing device 410, the second signal processing device 420 does not include a processor package.

That is, the second signal processing device 420 does not include a processor, RAM, ROM, or processor bus.

Meanwhile, the second signal processing device 420 can further include a second bus 534 for the second peripheral device communication interface 532.

Meanwhile, the second bus 534 can exchange data with the slave communication interface 420b.

Meanwhile, the slave communication interface 420b can receive control commands from the master communication interface 410b.

Meanwhile, the slave communication interface 420b can transmit the control commands received from the master communication interface 410b to the second peripheral device communication interface 532. If the second peripheral device communication interface 532 does not respond for a set period of time, the slave communication interface 420b can transmit a generated error response signal and a second interrupt from the second peripheral device communication interface 532 to the master communication interface 410b.

Meanwhile, the slave communication interface 420b can control communication with the second bus 534, or generate data based on a communication protocol.

Meanwhile, the second signal processing device 420 can further include a second clock signal generator 533 configured to generate a clock signal.

Meanwhile, the slave communication interface 420b can output data signals and clock signals.

Meanwhile, the second signal processing device 420 can deserialize the received serialized data, based on the clock signal from the second clock signal generator 533.

Meanwhile, the slave communication interface 420b can control data communication to be suspended for a certain period of time, when the occupancy rate of data communication line is greater than or equal to a reference value.

Meanwhile, the slave communication interface 420b can include a second CEALINK physical layer processor 548, a second data serializer or deserializer 546, a second buffer 544, a second bus controller 542, and a second register 531.

The second CEALINK physical layer processor 548 can output data to the outside or receive data, according to physical layer processing for CEALINK communication.

The second bus controller 542 can control communication with the second bus 534, or generate signals using a protocol for CEALINK communication.

Meanwhile, the second buffer 544 operates for asynchronous communication between the second bus controller 542 and the second data serializer or deserializer 546.

Meanwhile, the second data serializer or deserializer 546 can serialize data to be transmitted, or deserialize received data.

Meanwhile, the third signal processing device 430 includes a second slave communication interface 430b for data communication with the first signal processing device 410 and a third peripheral device communication interface 552.

Meanwhile, the third peripheral device communication interface 552 can exchange signals with peripheral device 551, such as sensor device, light-emitting diode, or switch.

Meanwhile, unlike the first signal processing device 410, the third signal processing device 430 does not include a processor package.

That is, the third signal processing device 430 does not include a processor, a RAM, a ROM, or a processor bus.

Meanwhile, the third signal processing device 430 can further include a third bus 554 for the third peripheral device communication interface 552.

Meanwhile, the third bus 554 can exchange data with the second slave communication interface 430b.

Meanwhile, the second slave communication interface 430b can receive control commands from the master communication interface 410b.

Meanwhile, the second slave communication interface 430b can transmit a control command received from the master communication interface 410b to the third peripheral device communication interface 552, and if the third peripheral device communication interface 552 does not respond for a second set time, transmit a generated error response signal and a third interrupt from the third peripheral device communication interface 552 to the master communication interface 410b.

Meanwhile, the second slave communication interface 430b can control communication with the third bus 554 or generate data based on a communication protocol.

Meanwhile, the third signal processing device 430 can further include a third clock signal generator 553 configured to generate a clock signal.

Meanwhile, the second slave communication interface 430b can output data signals and clock signals.

Meanwhile, the third signal processing device 430 can deserialize the received serialized data, based on the clock signal from the third clock signal generator 553.

Meanwhile, the second slave communication interface 430b can control data communication to be suspended for a certain period of time, when the occupancy rate of data communication line is greater than or equal to a reference value.

Meanwhile, the second slave communication interface 430b can include a third CEALINK physical layer processor 568, a third data serializer or deserializer 566, a third buffer 564, a third bus controller 562, and a third register 561.

The third CEALINK physical layer processor 568 can output data to the outside or receive data, according to physical layer processing for CEALINK communication.

The third bus controller 562 can control communication with the third bus 554, or generate signals using a protocol for CEALINK communication.

Meanwhile, the third buffer 564 operates for asynchronous communication between the third bus controller 562 and the third data serializer or deserializer 566.

Meanwhile, the third data serializer or deserializer 566 can serialize data to be transmitted, or deserialize received data.

Meanwhile, the electric device 200 according to another embodiment of the present disclosure includes a first signal processing device 410, a second signal processing device 420, and a third signal processing device 430. The first signal processing device 410 includes a processor 518 and a master communication interface 410b for data communication with the second signal processing device 420. The second signal processing device 420 includes a slave communication interface 420b for data communication with the first signal processing device 410. The third signal processing device 430 includes a second slave communication interface 430b for data communication with the first signal processing device 410.

At this time, the master communication interface 410b transmits a control command, and the slave communication interface 420b and the second slave communication interface 430b receive the control command. Accordingly, extensible data communication can be stably performed. In particular, extensible data communication can be stably performed between circuit boards. Furthermore, common data communication can be applied to various types of electrical devices.

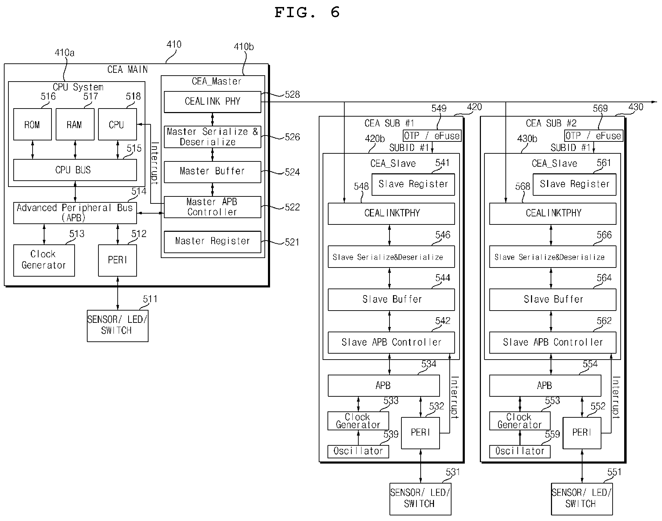

FIG. 6 is another example of the internal block diagram of each signal processing device of FIG. 4.

Referring to FIG. 6, the first signal processing device 410 is identical to the first signal processing device 410 of FIG. 5.

Meanwhile, the second signal processing device 420 is almost identical to that of FIG. 5, but differs in that it further includes, therein, a storage 549 for storing system setting information such as SUBID, and an oscillator 539 for the second clock signal generator 533.

Meanwhile, the third signal processing device 430 is almost identical to that of FIG. 5, but differs in that it further includes, therein, a storage 569 for storing system setting information such as SUBID, and an oscillator 559 for the third clock signal generator 553.

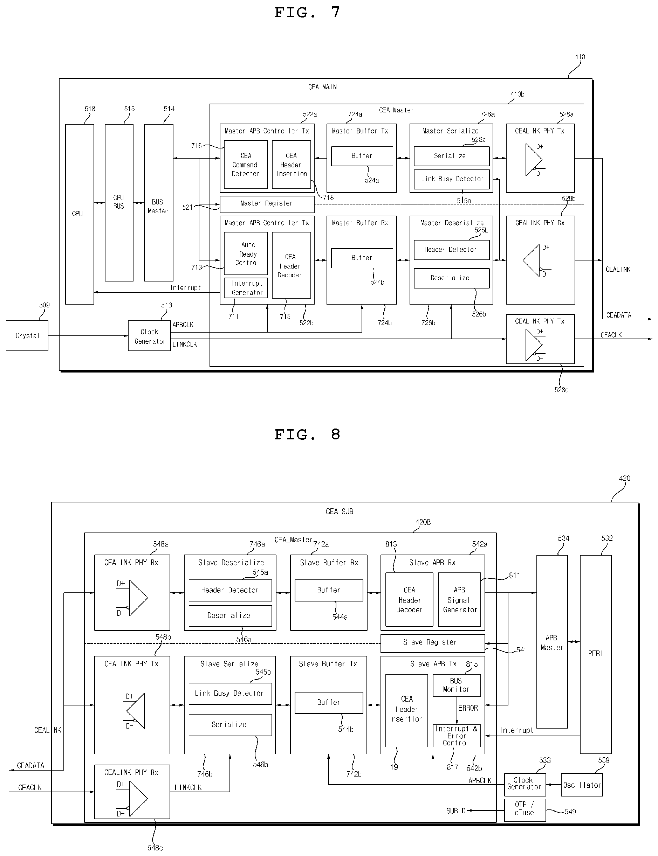

FIG. 7 is an example of a detailed block diagram of the first signal processing device of FIG. 4.

Referring to FIG. 7, the first signal processing device 410 includes a processor 518, a master communication interface 410b for data communication with the second signal processing device 420, and a peripheral device communication interface 512.

Meanwhile, the first signal processing device 410 can further include a bus 514 for the peripheral device communication interface 512, a processor bus 515 between the bus 514 and the processor 518, and a clock signal generator 513 for generating a clock signal.

Meanwhile, FIG. 7 shows that the oscillator 509 for the clock signal generator 513 is arranged outside the first signal processing device 410. However, unlike FIG. 7, it can be arranged inside the first signal processing device 410.

Meanwhile, the master communication interface 410b can include a bus controller 522a for data transmission, a buffer 524a for data transmission, a data serializer 726a for data transmission, and a physical layer processor 528a for data transmission.

Meanwhile, the bus controller 522a for data transmission can include a command detector 716 and a header inserter 718 for inserting a header on the basis of a CEALINK-based communication protocol.

Meanwhile, the data serializer 726a can include a data serialization processor 526a and a link busy detector 515a that detects whether the occupancy rate of data communication line is greater than or equal to a reference value.

Meanwhile, the master communication interface 410b can include a bus controller 522b for data reception, a buffer 524b for data reception, a data deserializer 726b for data reception, and a physical layer processor 528b for data reception.

Meanwhile, the data deserializer 726b can include a header detector 525b for detecting the header of the received data, and a data deserialization processor 526b.

Meanwhile, the bus controller 522b for data reception can include a header decoder 715 that decodes the header of the received data, an interrupt signal generator 711 configured to generate an interrupt signal, and an auto-ready controller 713 that automatically controls the standby state during data communication.

Meanwhile, the master communication interface 410b can further include a physical layer processor 528c for transmitting the clock signal generated by the clock signal generator 513 to the outside.

Meanwhile, the clock signal generated by the clock signal generator 513 is also transmitted to a buffer 524b for data reception and used during data reception.

FIG. 8 is an example of a detailed block diagram of the second signal processing device of FIG. 4.

Referring to FIG. 8, the second signal processing device 420 includes a slave communication interface 420b for data communication with the first signal processing device 410, and a second peripheral device communication interface 532.

Meanwhile, the second signal processing device 420 can further include a second bus 534 for the second peripheral device communication interface 532, a second clock signal generator 533 for generating a second clock signal, and a storage 549 for storing system setting information such as a SUBID.

Meanwhile, FIG. 8 shows that the second oscillator 539 for the second clock signal generator 533 is arranged within the second signal processing device 420. However, unlike FIG. 8, it can also be arranged outside the second signal processing device 420.

Meanwhile, the slave communication interface 420b can include a second bus controller 542a for data reception, a second buffer 544a for data reception, a second data deserializer 746a for data reception, and a second physical layer processor 548a for data reception.

Meanwhile, the second bus controller 542a for data reception can include a header decoder 813 for decoding the header of the received data, and a bus signal generator 811 for generating a bus signal.

Meanwhile, the second data deserializer 746b can include a header detector 545a for detecting the header of the received data, and a data deserialization processor 546a.

Meanwhile, the slave communication interface 420b can include a second bus controller 542b for data transmission, a second buffer 544b for data transmission, a second data serializer 746b for data transmission, and a second physical layer processor 548b for data transmission.

Meanwhile, the second bus controller 542b for data transmission can include a bus monitor 815 for monitoring the second bus 534, a controller 817 for controlling an interrupt or an error, and a header inserter 718 for inserting a header on the basis of a CEALINK-based communication protocol.

Meanwhile, the second data serializer 726a can include a data serialization processor 546b and a link busy detector 545b for detecting whether the occupancy rate of data communication line is greater than or equal to a reference value.

Meanwhile, the slave communication interface 420b can further include a second physical layer processor 548c for receiving a clock signal received from the master communication interface 410b.

Meanwhile, the second clock signal generated by the second clock signal generator 533 is transmitted to the second buffer 544b and the second bus controller 542b for data transmission, and used during data transmission.

Meanwhile, the slave communication interface 420b transmits a control command received from the master communication interface 410b to the second peripheral device communication interface 532. If the second peripheral device communication interface 532 does not respond for a set period of time, the slave communication interface 420b can transmit a generated error response signal and a second interrupt from the second peripheral device communication interface 532 to the master communication interface 410b. Accordingly, extensible data communication can be performed stably.

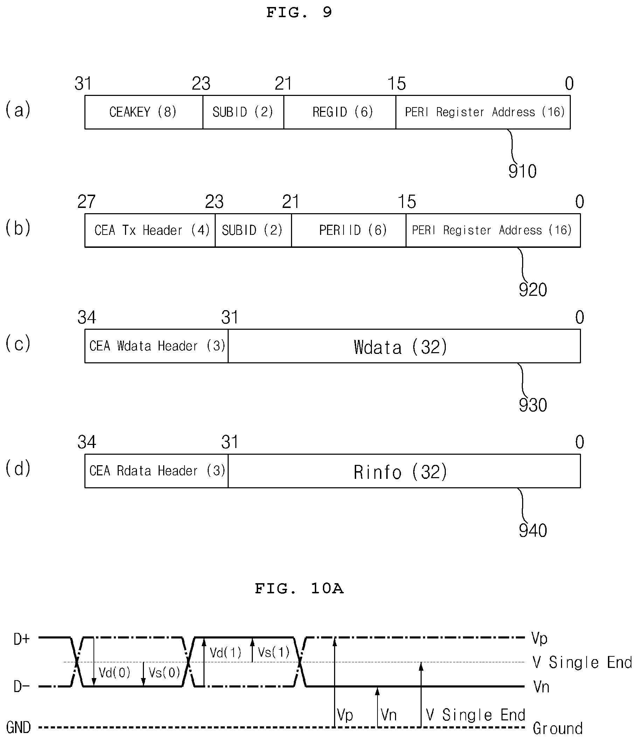

FIG. 9 is a diagram illustrating various examples of data transmitted within the electrical device of FIG. 4.

Referring to the drawing, FIG. 9(a) illustrates common address data 910 based on the CEALINK communication protocol that is output from the master communication interface 410b, the slave communication interface 420b, or the second slave communication interface 430b.

The common address data 910 can include key information, register indicator information, slave indicator information, and address information.

For example, the key information CEAKEY can be 8 bits, and include key data stored in a register (521, 541, or 561).

Meanwhile, the slave indicator information SUBID can be 2 bits, and include an identifier ID indicating the slave signal processing device (420 or 430) or the slave communication interface (420b or 430b).

Meanwhile, the register indicator information REGID is 6 bits, and can include an identifier ID indicating a register (521, 541, or 561) within the communication interface (410b, 420b, or 430b) .

For example, if the register indicator information REGID is "111111", it can indicate a register 521 within the master communication interface 410b. If the register indicator information REGID is "111110", it can indicate a second register 541 within the slave communication interface 420b.

Meanwhile, the address information (PERI register Address) is 16 bits, and can indicate address information of register.

Referring to the drawing, FIG. 9(b) illustrates transmission address data 920 based on the CEALINK communication protocol that is output from the master communication interface 410b, the slave communication interface 420b, or the second slave communication interface 430b.

The transmission address data 920 can include write address information, read address information, and monitoring information.

As shown in the drawing, the transmission address data 920 can include a 4-bit transmission header (Tx Header), 2-bit slave indicator information (SUBID), 6-bit PERI information (PERID), and 16-bit PERI register address information (PERI register address).

Meanwhile, the transmission header (Tx Header) can include reset information, bus monitoring information, write address information, read address information, idle status information, etc.

For example, if the transmission header (Tx Header) is "11xx", it can indicate reset information, if it is "101x", it can indicate bus monitoring information, if it is "1001", it can indicate write address information, and if it is "1000", it can indicate read address information.

Referring to the drawing, FIG. 9(c) illustrates transmission data 930 based on CEALINK communication protocol that is output from the master communication interface 410b, the slave communication interface 420b, or the second slave communication interface 430b.

The transmission data 930 can include a 3-bit write header (Wdata Header) and 32-bit write data (Wdata).

Referring to the drawing, FIG. 9(d) illustrates reception data 940 based on CEALINK communication protocol that is output from the master communication interface 410b, the slave communication interface 420b, or the second slave communication interface 430b.

The reception data 940 can include a 3-bit read header (Wread Header) and 32-bit write information (Rinfo).

For example, if the read header (Wread Header) is "001", it can indicate error information, if it is "010", it can indicate interrupt information, and if it is "011", it can indicate read data (Rdata).

Meanwhile, the master communication interface 410b or the slave communication interface 420b or the second slave communication interface 430b can apply auto ready which automatically controls the standby state, etc. during data communication, within the range permitted by the buffer, when the communication data is a transmission command.

Meanwhile, the master communication interface 410b or the slave communication interface 420b or the second slave communication interface 430b can apply auto ready immediately when a reception command for the same address is received after transmission of the transmission command.

Meanwhile, the master communication interface 410b or the slave communication interface 420b or the second slave communication interface 430b cannot apply auto ready, when it is a random access read command.

FIG. 10A is a diagram illustrating an example of signaling during data communication.

Referring to FIG. 10A, D+ indicates a positive voltage signal, D- indicates a negative voltage signal, and GND indicates a ground voltage.

Meanwhile, Vp indicates a high level of a positive or negative voltage signal, and Vn indicates a high level of a positive or negative voltage signal.

V single end can indicate a reference voltage of a signal based on a single end interface.

Vd(1) and Vd(0) can indicate a high level and a low level, respectively, of a signal based on a differential end interface.

Vs(1) and Vs(0) can indicate a high level and a low level, respectively, of a signal based on a single end interface.

Meanwhile, a signal output from the master communication interface 410b, the slave communication interface 420b, or the second slave communication interface 430b can be a signal based on a differential end interface or a signal based on a single end interface.

For example, a signal based on a differential end interface can be output as D+ and D-.

As another example, a signal based on a single end interface can be D+ or D-.

Meanwhile, a signal output from the master communication interface 410b, the slave communication interface 420b, or the second slave communication interface 430b can be a data signal or a clock signal, and the data signal or clock signal can be a signal based on a differential end interface or a signal based on a single end interface.

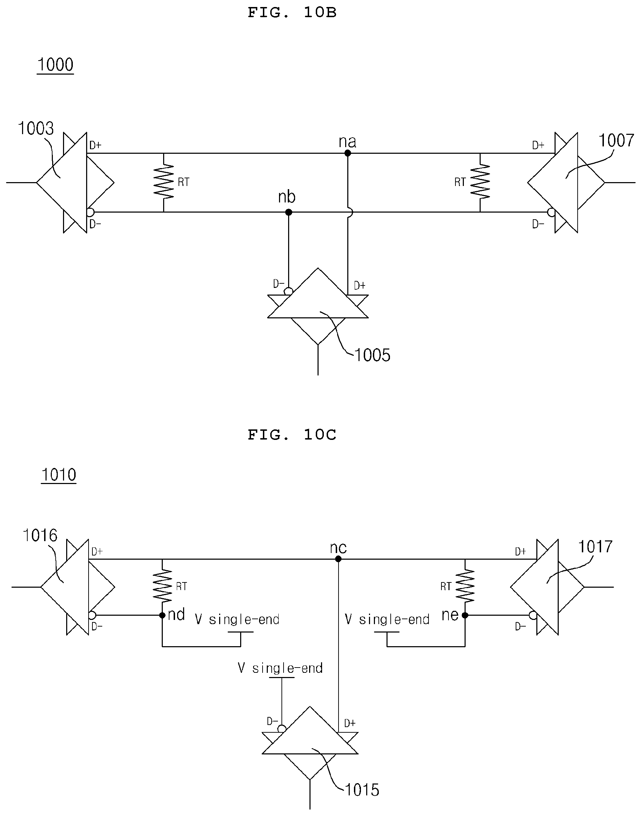

Meanwhile, the master communication interface 410b, the slave communication interface 420b, or the second slave communication interface 430b can include a differential end interface, like FIG. 10B.

Meanwhile, the master communication interface 410b, the slave communication interface 420b, or the second slave communication interface 430b can include a single end interface, like FIG. 10C.

FIG. 10B illustrates a differential end interface system.

Referring to FIG. 10B, the differential end interface system 1000 can include a transmitter 1003 and a receiver 1007 connected to na node and nb node, respectively.

Such a differential end interface system 1000 is useful for long-distance data communication, and is useful in a high-noise environment.

FIG. 10C illustrates a single end interface system.

Referring to FIG. 10C, the single end interface system 1010 can include a transmitter 1016 and a receiver 1017 that have one end connected to nc node.

Meanwhile, the other ends of the transmitter 1016 and the receiver 1017 can be connected to the nd and ne nodes, respectively.

Such a single end interface system 1010 is useful for short-distance data communication, and is useful in a low noise environment.

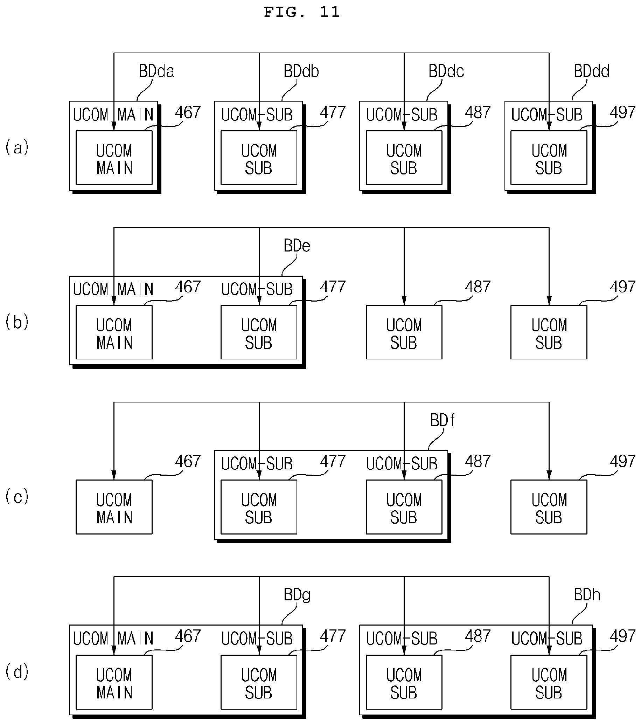

FIG. 11 is a diagram illustrating various examples of an arrangement of a plurality of signal processing devices according to an embodiment of the present disclosure.

Referring to FIG. 11, as shown in FIG. 11(a), a plurality of signal processing devices 467, 477, 487, 497 according to an embodiment of the present disclosure can be mounted on respective circuit boards BDax, BDbx, BDcx, BDd.

Alternatively, as shown in FIG. 11(b), some 467, 487 of the plurality of signal processing devices 467, 477, 487, 497 can be mounted on a circuit board BDe, while others 487, 497 cannot be mounted on a circuit board.

Alternatively, as shown in FIG. 11(c), some 477, 487 of the plurality of signal processing devices 467, 477, 487, 497 can be mounted on the circuit board BDf, while others 467, 497 cannot be mounted on the circuit board.

Alternatively, as shown in FIG. 11(d), some 467, 487 of the signal processing devices 467, 477, 487, 497 can be mounted on the first circuit board BDg, and others 487, 497 can be mounted on the second circuit board BDj.

Meanwhile, data communication between the plurality of signal processing devices 467, 477, 487, 497 in FIGS. 11(a) to 11(d) can be performed using the CEALINK communication method, as described in FIG. 4 and below.

Such a communication method enables to stably perform an extensible data communication. In particular, extensible data communication can be stably performed between circuit boards. Furthermore, common data communication can be applied to various types of electrical devices.

Although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the technical spirit or scope of the present disclosure.

## Claims

1. An electrical device comprising:
a first circuit board including a first signal processing device; and
a second circuit board including a second signal processing device,
wherein the first signal processing device comprises a processor, a master communication interface for data communication with the second signal processing device, and a peripheral device communication interface, and
wherein the second signal processing device comprises a slave communication interface for data communication with the first signal processing device and a second peripheral device communication interface,
wherein the master communication interface is configured to transmit a first interrupt to the processor, and
the second peripheral device communication interface is configured to transmit a second interrupt to the slave communication interface.

2. The electrical device of claim 1, wherein the master communication interface is configured to transmit a control command, and
the slave communication interface is configured to receive the control command.

3. The electrical device of claim 1, wherein the master communication interface is configured to output serialized data or deserialize received serialized data.

4. The electrical device of claim 1, wherein the first signal processing device further comprises a bus for the peripheral device communication interface,
wherein the bus is configured to exchange data with the processor or the master communication interface.

5. The electrical device of claim 4, wherein the master communication interface is configured to control communication with the bus, or generate data based on a communication protocol.

6. The electrical device of claim 1, wherein the second signal processing device further comprises a second bus for the second peripheral device communication interface,
wherein the second bus is configured to exchange data with the slave communication interface.

7. The electrical device of claim 6, wherein the slave communication interface is configured to control communication with the second bus, or generate data based on a communication protocol.

8. The electrical device of claim 1, wherein the first signal processing device further comprises a clock signal generator configured to generate a clock signal,
wherein the master communication interface is configured to output a data signal and the clock signal.

9. The electrical device of claim 8, wherein the first signal processing device is configured to deserialize received serialized data, based on the clock signal from the clock signal generator.

10. The electrical device of claim 1, wherein the master communication interface is configured to stop data communication for a certain period of time, in response to an occupancy rate of data communication line being greater than or equal to a reference value.

11. The electrical device of claim 1, wherein the slave communication interface is configured to transmit a control command received from the master communication interface to the second peripheral device communication interface, and,
in response to the second peripheral device communication interface not responding for a set period of time, transmit a generated error response signal and the second interrupt from the second peripheral device communication interface to the master communication interface.

12. The electrical device of claim 1, wherein a common address data output from the master communication interface comprises key information, register indicator information, slave indicator information, and address information.

13. The electrical device of claim 1, wherein transmission address data output from the master communication interface comprises write address information, read address information, and monitoring information.

14. The electrical device of claim 1, wherein the reception data received from the master communication interface comprises error information and interrupt information.

15. The electrical device of claim 1, wherein the master communication interface or the slave communication interface comprises a differential end interface.

16. The electrical device of claim 1, wherein the master communication interface or the slave communication interface comprises a single end interface.

17. The electrical device of claim 1, further comprising a third circuit board including a third signal processing device,
wherein the third signal processing device comprises a second slave communication interface for data communication with the first signal processing device and a third peripheral device communication interface,
wherein the third peripheral device communication interface is configured to transmit a third interrupt to the second slave communication interface.

18. The electrical device of claim 17, wherein the master communication interface is configured to transmit a control command, and
the slave communication interface and the second slave communication interface are configured to receive the control command.

19. The electrical device of claim 17, wherein the second slave communication interface is configured to transmit a control command received from the master communication interface to the third peripheral device communication interface, and
in response to the third peripheral device communication interface not responding for a second set period of time, transmit a generated second error response signal and the third interrupt from the third peripheral device communication interface to the master communication interface.

20. An electrical device comprising:
a first signal processing device;
a second signal processing device; and
a third signal processing device,
wherein the first signal processing device comprises a processor and a master communication interface for data communication with the second signal processing device,
wherein the second signal processing device comprises a slave communication interface for data communication with the first signal processing device,
wherein the third signal processing device comprises a second slave communication interface for data communication with the first signal processing device,
wherein the master communication interface is configured to transmit a control command, and
the slave communication interface and the second slave communication interface are configured to receive the control command.
